Europäisches Patentamt

**European Patent Office**

**Office européen des brevets**

(11) Publication number: **0 318 788**
**A2**

## EUROPEAN PATENT APPLICATION

(21) Application number: **88119304.9**

(22) Date of filing: **21.11.88**

(51) Int. Cl.4: **C08L 67/00 , C08K 3/00 , C08K 5/00 , //(C08L67/00, 67:02)**

(30) Priority: **02.12.87 US 127328**

(43) Date of publication of application:
**07.06.89 Bulletin 89/23**

(84) Designated Contracting States:
**DE FR GB IT NL**

(71) Applicant: **GENERAL ELECTRIC COMPANY**
**1 River Road**
**Schenectady New York 12305(US)**

(72) Inventor: **Liu, Nan-I**
**1604 Country Club Road, No. D**
**Mt. Vernon Indiana 47620(US)**

(74) Representative: **Catherine, Alain**
**General Electric France Service de Propriété**
**Industrielle 18 Rue Horace Vernet B.P. 76**
**F-92134 Issy-les-Moulineaux Cedex(FR)**

(54) Improved nucleated thermoplastic copolyetherester molding compositions.

(57) Improved nucleated thermoplastic copolyetherester elastomers containing polybutylene terephthalate (PBT) and nucleating agents. PBT and nucleating agent blended with copolyehterester elastomers. substantially improves crystallization properties of the copolyetherester.

EP 0 318 788 A2

# IMPROVED NUCLEATED THERMOPLASTIC COPOLYETHERESTER MOLDING COMPOSITION

## Background of the Invention

The invention relates to improved copolyetherester thermoplastic compositions, and more particularly, to improved nucleated copolyetherester thermoplastic compositions having increased crystallization temperatures $(T_c)$, increased crystallization rates and/or reduced mold cycle time. These compositions are particularly useful for production of finished polymer products by such techniques as injection molding, blow molding, rotational molding and the like.

Polyetheresters and the method of producing them are well-known in the art and are available commercially from a number of sources including General Electric Company under the trademark LOMOD®. Copolyetherester elastomers are limited in molding applications due to their very soft to semi-rigid physical state, and many molding applications require that the molding compositions have good resistance to bending upon impact. Further, the copolyetheresters crystallize slowly, and it is desirable that many molding applications utilize molding compositions which crystallize at a higher or faster rate than copolyetheresters. Accordingly, it is desirable to reduce mold cycle time and increase crystallization temperature $(T_c)$ and crystallization rate of the copolyetheresters without adversely effecting the other properties of the copolyetheresters. This creates substantial efficiencies in time and reduced costs in manufacturing processes.

The use of nucleating agents, also called crystallization improvers or crystallization promoters, to promote or enhance the crystallization of slowly crystallizable polyester resins such as, poly(ethylene terephthalate), is known. Nucleating agents, such as talc, in poly(ethylene terephthalate), have been used alone or have been combined with other polymers, such as, polycarbonates, to make molding compositions having one or more improved characteristics or properties.

In one prior art embodiment, talc has been used as a crystallization promoting agent in very limiting amounts, that is, less than 1 part by weight. For example, in JP 80/52343 (published April 16, 1980) and abstracted in Chemical Abstracts 93(14):133342e, there are disclosed crystalline polyester compositions of a polyether/polycarbonate copolymer with 0.3 parts by weight of talc crystallization improver. In another reference, JP 81/32537 (April 2, 1981), Chemical Abstracts 95(2):83309, glass-reinforced polyester compositions for molding are prepared from poly(ethylene terephthalate) and 0.7 parts by weight of talc. In JP 83 93752 (June 3, 1983), Chemical Abstracts 100(8):52546k, there are disclosed polyester molding compositions employing poly(ethylene terephthalate) and crystal nucleating agents, such as, 1 part by weight of metal salts of aromatic oxysulfonic acids and/or talc. In JP 83/127756 (July 29, 1983), Chemical Abstracts 100(10): 69288a, 0.5 parts by weight of talc is employed in polyester molding compositions of poly(ethylene terephthalate) and polycaprolactone. In JP 83/129047 (August 1, 1983), Chemical Abstracts 100(8):525750, glass-reinforced polyester compositions are disclosed which contain poly(ethylene terephthalate), a condensation product of diphenyl ether or diphenyl thioether and a carbonyl compound, and 1.0 part by weight of a talc nucleating agent.

In another approach, large quantities of talc, in excess of 10 parts by weight, have been employed in polyester compositions. In U.K. 1,592,206, corresponding to German Offen. DE 2,755,950 (June 29, 1978), flame-retardant reinforced thermoplastic poly(ethylene terephthalate)/polycarbonate compositions are disclosed which have a concentration of 10-50% by weight talc and preferably 10-30% by weight talc to effect an appreciable increase in the arc track resistance of the composition. In JP 77/8059 (January 21, 1977), Chemical Abstracts 87(2): 68969, a similar resin composition is disclosed which utilizes talc and/or $SiO_2$ in a concentration range of 25-40% by weight. In JP 83/52343 (April 15, 1983), Chemical Abstracts 99(22)-:176931n, 5 parts by weight of talc is used as a nucleating agent for polyester compositions of poly-(ethylene terephthalate), poly(butylene terephthalate) and polycaprolactone.

In still other proposed compositions, intermediate amounts of a nucleating agent between 0.1 to 4-5 parts by weight have been employed in poly(ethylene terephthalate/polycarbonate compositions. For example, in U.S. 4,587,272, Avakian et al. disclose foamable thermpolastic compositions of polycarbonate alone, or with poly(ethylene terephthalate), a foaming agent and 0.1 to 5.0 parts by weight of a foam nucleating agent to provide a surface for bubble formation. Among the suitable foam nuclating agents included in U.S. 4,587,272 are organic polymeric particulates further comprising an acrylate impact modifier. In EP 135904 (published April 3, 1985), there are disclosed poly(ethylene terephthalate) moldable blends containing graft-modified rubber and 0.1-4.5%, and preferably 0.5-3.5% by weight, of talc, which is said to reduce warping.

It has also been discovered by W.F.H. Borman and M.G. Minnick in copending U.S. application Serial No. 948,275 filed December 13, 1985 and entitled "Improved Nucleated Reinforced Polyester/Polycarbonate Molding Compositions", that the addition of from about 2 to about 10% by weight of talc, to reinforced blends comprising poly(ethylene terephthalate) and polycarbonates substantially improves the physical properties of the compositions and further, that by including sodium dihydrogen phosphate in said compositions further improves the physical properties.

It has also been suggested in the prior art that flexural modulus, as well as other physical properties, may be enhanced by blending one or more thermoplastic polyesters with copolyetheresters. For example, Brown et al. in U.S. Patent No. 3,907,926, disclose an improved copolyetherester and poly(butylene terephthalate)-containing blend which has high Young's modulus at room temperature and above and also possesses good low temperature impact strength and flexibility. Charles et al. in U.S. Patent No. 4,469,851, disclose copolyetherester and polybutylene terephthalate (PBT) blends having superior melt stability. It has been suggested by Avery et al. in U.S. Patent No. 4,212,791 that segmented polyester-polyether block copolymers behave synergistically with oligomeric polyester to improve crystallization temperature and rate in a composition having an inert particulate nucleating agent such as, talc, kaolin, $CaCO_3$, $Al_2O_3$, silica and graphite, and poly(alkylene terephthalate). Light et al. in U.S. Patent No. 3,957,706 provide compositions having a sodium salt of a monocarboxylic acid and a polyetherester elastomer having good compression recovery after deformation and clearness. In U.S. Patent No. 4,579,884 Liu has prepared blends of a copolyetherester, an aromatic thermoplastic polyester and a clay which are capable of absorbing high energy impact and withstanding high temperatures.

In many cases, attempts to improve certain properties of a copolyestherester often have an adverse effect on other properties of the copolyetherester, and improvements in one property often result in a substantial sacrifice in the performance of the polymer because of the impact of a particular addition or agent on another property of the polymer. Frequently, when agents are used to enhance crystallixation in a copolyetherester, there is a substantial impact on flexural modulus, i.e. flexural modulus is increased to unacceptable limits. Accordingly, it is desirable to improve the prior art nucleating agents and systems which increase crystallization rate, increase crystallization temperature $(T_c)$ and/or reduce mold cycle time without any substantial increase in flexural modulus.

## Summary of the Invention

Accordingly, it is the primary object of the present invention to prepare novel copolyetherester compositions.

Another object of the present invention is to provide a copolyetherester composition having improved nucleation characteristics without adversely effecting the flexural modulus of the copolyetherester to any significant extent.

It is another object of the present invention to provide an improved copolyetherester composition which produces molded articles having increased crystallization temperature, increased crystallization rate and/or reduced mold cycle time without substantially increasing flexural modulus.

Still another object of the present invention is to provide copolyetherester elastomeric molding compositions which are suitable for injection molding, blow molding, rotational molding and other end use applications.

These and other objects are achieved in accordance with the invention, by improved nucleated, copolyetherester elastomer blends which are particularly suited for molding applications.

The blends of the present invention have one or more thermoplastic elastomeric copolyetheresters, an inert particulate nucleating agent and poly(butylene terephthalate). In particular, the elastomeric blends of the present invention comprise about 94 to about 97.9 percent by weight of the total composition of one or more thermoplastic elastomeric copolyetheresters; about 0.1 to about 1.0 percent by weight of the total composition of inert particulate nucleating agent; and about 2.0 to about 5.0 percent by weight of the total composition of poly(butylene terephthalate). These compositions exhibit an excellent combination of physical properties typified by enhanced crystallization properties or the enhancement of other properties which reduce mold cycle time and/or improve molding properties without any substantial increase in flexural modulus.

3

### Detailed Description of the Invention

The copolyetherester elastomers of the present invention may be either random or block copolymers and are prepared by conventional processes by combining one or more diols, one or more dicarboxylic acids, one or more long chain glycols, and optionally, one or more caprolactones or polycaprolactones. Examples of various copolyetherester elastomers and the method of producing them are described in U.S. Patent Nos. 3,047,539; 3,663,653; 3,651,014; 3,763,109; and 3,766,146, all of which are incorporated herein by reference for their teachings of various copolyetherester compositions and the substituents from which they are derived as well as their method of manufacture. Furthermore, they are commercially available from various companies such as, from General Electric Company under the trademark LOMOD® and include LOMOD® B, LOMOD® C and LOMOD® H. The present invention is not limited to any particular copolyetherester as long as the synergistic combination of poly(butylene terephthalate) and the inert, particulate nucleating agent improve the crystallization properties and/or mold cycle time.

Diols which are suitable for preparing the copolyetherester for the present invention include both saturated and unsaturated aliphatic, cycloaliphatic and aromatic dihydroxy compounds having low molecular weights. Preferred diols have a molecular weight of about 300 or less. Preferred saturated and unsaturated aliphatic and cycloaliphatic diols are those having from about 2 to about 19 carbon atoms ($C_2$ - $C_{19}$). Examples of these diols include ethylene glycol; propanediol; butanediol; pentanediol; 2-methyl propanediol; 2.2-dimethyl propanediol; hexanediol; decanediol; 2-octyl undecanediol; 1,2-, 1,3- and 1,4-dihydroxy cyclohexane; 1,2-, 1,3- and 1,4-cyclohexane dimethanol; butenediol; hexenediol and the like. Especially preferred are 1,4-butanediol and mixtures thereof with hexanediol or butenediol.

Aromatic diols suitable for use in the preparation of the thermoplastic elastomers are generally those having from 6 to about 19 carbon atoms ($C_6$ -$C_{19}$). Included among the aromatic dihydroxy compounds are resorcinol; hydroquinone; 1,5-dihydroxy naphthalene; 4,4'-dihydroxy diphenyl; bis(p-hydroxy phenyl)-methane and 2,2-bis(p-hydroxy phenyl)propane.

Especially preferred diols are the saturated aliphatic diols, mixtures thereof and mixtures of saturated diol(s) with unsaturated diol(s), wherein each diol contains from about 2 to about 8 carbon atoms ($C_2$-$C_8$). Where more than one diol is employed, it it preferred that at least about 80 mole percent, based on the total diol content, be the same diol.

When used herein the term "diols" include the equivalent ester-forming derivatives thereof. Examples of ester-forming derivatives are the acetates of the diols as well as for example, ethylene oxide or ethylen carbonate.

The dicarboxylic acids which are suitable for use in the preparation of the copolyetheresters, include aliphatic, cycloaliphatic and aromatic dicarboxylic acids. These acids are preferably of a low molecular weight, for example, a molecular weight of less than about 350; however, higher molecular weight dicarboxylic acids, especially dimer acids, may also be used. The term "dicarboxylic acids" as used herein, includes equivalents of dicarboxylic acids having two functional carboxyl groups which perform substantially like dicarboxylic acids in reactions with glycols and diols in forming polyester polymers. These equivalents include esters and ester-forming derivatives, such as acid halides and anhydrides. Additionally, the dicarboxylic acids may contain any substitutent group(s) or combinations which do not substantially interfere with the polymer formation and use of the polymer in the practice of this invention.

Aliphatic dicarboxylic acids, as the term is used herein, refers to carboxylic acids having two carboxyl groups each of which is attached to a saturated carbon atom. If the carbon atom to which the carboxyl group is attached, is saturated and is in a ring, the acid is cycloaliphatic.

Aromatic dicarboxylic acids, as the term is used herein, are dicarboxylic acids having two carboxyl groups each of which is attached to a carbon atom in an isolated or fused benzene ring system. It is not necessary that both functional carboxyl groups be attached to the same aromatic ring and where more than one ring is present, they can be joined by aliphatic or aromatic divalent radicals or divalent radicals such as for example, -O- or -$SO_2$-.

Representative aliphatic and cycloaliphatic acids are sebacic acid; 1,2-cyclohexane dicarboxylic acid; 1,3-cyclohexane dicarboxylic acid; 1,4-cyclohexane dicarboxylic acid; adipic acid; glutaric acid; succinic acid; carbonic acid; oxalic acid; azelaic acid; itaconic acid; diethylmalonic acid; allylmalonic acid; dimer acid; 4-cyclohexene-1,2-dicarboxylic acid; 2-ethylsuberic acid; tetramethylsuccinic acid; cyclopentane dicarboxylic acid; decahydro-1,5-naphthalene dicarboxylic acid; 4,4'-bicyclohexyl dicarboxylic acid; decahydro-2,6-naphthalene dicarboxylic acid; 4,4'-methylenebis(cyclohexyl carboxylic acid); 3,4-furan dicarboxylic acid; and 1,1-cyclobutane dicarboxylic acid. Preferred aliphatic acids are cyclohexane dicarboxylic acids, sebacic acid, dimer acid, glutaric acid, azelaic acid and adipic acid.

Representative aromatic dicarboxylic acids include terephthalic, phthalic and isophthalic acids; bibenzoic acid; substituted dicarboxy compounds with two benzene nuclei, such as bis(p-carboxyphenyl) methane; oxybis(benzoic acid); ethylene-1,2-bis-(p-oxybenzoic acid); 1,5-naphthalene dicarboxylic acid; 2,6-naphthalene dicarboxylic acid; 2,7-naphthalene dicarboxylic acid; phenanthrene dicarboxylic acid; anthracene dicarboxylic acid; 4,4'-sulfonyl dibenzoic acid; and halo and $C_1$-$C_{12}$ alkyl, alkoxy, and aryl ring substitution derivatives thereof. Hydroxy acids such as, p(beta-hydroxyethoxy)benzoic acid can also be used provided an aromatic dicarboxylic acid is also present

Preferred dicarboxylic acids for the preparation of the polyetheresters are the aromatic dicarboxylic acids, mixtures thereof and mixtures of one or more dicarboxylic acid with an aliphatic and/or cycloaliphatic dicarboxylic acid, most preferably the aromatic dicarboxylic acids. Among the aromatic acids, those with 8 to 16 carbon atoms ($C_8$ - $C_{16}$) are preferred, particularly the benzene dicarboxylic acids, i.e., phthalic, terephthalic and isophthalic acids and the dimethyl derivatives thereof. Especially preferred is the dimethyl ester derivative of terephthalic acid.

Where mixtures of dicarboxylic acids are employed, it is preferred that at least about 60 mole percent, preferably at least about 80 mole percent, based on 100 mole percent of dicarboxylic acid, be the same dicarboxylic acid or ester derivative thereof. As mentioned above, the preferred copolyetheresters are those in which the dimethylterephthalate is the predominant dicarboxylic acid ester.

The poly(alkylene oxide)glycols used in the preparation of the copolymers of the present invention are long-chain glycols having terminal hydroxy groups and a molecular weight of from about 400 to about 12,000, preferably about 900 to about 6,000. Additionally, the poly(alkylene oxide)glycols have a carbon-to-oxygen ratio of from about 2.0 to 4.3.

Representative long-chain glycols are polyethylene oxide)glycol; poly(1,2- and 1,3-propylene oxide)-glycol; poly(tetramethylene oxide)glycol; random or block copolymers of ethylene oxide and 1,2-propylene oxide; and random or block copolymers of tetrahydrofuran with minor amounts of a second monomer such as, 3-methyltetrahydrofuran (used in proportions such that the carbon-to-oxygen mole ratio in the glycol does not exceed about 4.3). Polyformal glycols prepared by reacting formaldehyde with diols such as 1,4-butanediol and 1,5-pentanediol, may also be used. Especially preferred poly(oxyalkylene)glycols are poly-(ethylene ether)glycol, poly(propylene ether)glycol, poly(tetramethylene ether) glycol and poly(ethylene ether)backbone/copoly(propylene ether-ethylene ether)glycol.

Optionally, the copolyetheresters of the present invention may have incorporated therein one or more caprolactones or polycaprolactones. Such caprolactone-modified copolyetheresters are described in U.S. Patent No. 4,569,973, incorporated herein by reference.

Caprolactones suitable for use herein are widely available commercially. While epsiloncaprolactone is especially preferred, it is also possible to use substituted caprolactones wherein the epsilon-caprolactone is substituted by a lower alkyl such as, a methyl or ethyl group at the alpha, beta, gamma, delta or epsilon positions. Additionally, it is possible to use polycaprolactone, including homopolymers and copolymers thereof with one or more components, as well as hydroxy terminated polycaprolactones, as block units in the novel copolyetheresters of the present invention. Suitable polycaprolactones and processes for their production are described in, for example, U.S. Patent Nos. 3,761,511, 3,767,627 and 3,806,495, all incorporated herein by reference.

In general, suitable copolyetherester elastomers are those in which the weight percent of long chain glycol component or the combined weight percent of long chain glycol component and caprolactone component in the copolyetherester is from about 5 to about 70 weight percent. Preferred compositions are those wherein the weight percent of long chain ether glycol component or long chain ether glycol component and caprolactone component is from about 10 to about 50 weight percent. Where both long chain ether glycol and caprolactone are present, each will comprise from about 2 to about 50 percent by weight, preferably from about 5 to about 30 percent by weight, of the copolyetherester.

In general, as set forth above, the copolyetheresters of the present invention are prepared from one or more diols, one or more dicarboxylic acids or ester derivatives thereof, one or more poly(alkylene oxide)-glycols and optionally, one or more caprolactones and polycaprolactones. Preferred copolyetherester compositions are the reaction products of one or more $C_2$ to $C_{19}$, preferably $C_2$ to $C_8$ aliphatic diols, one or more $C_8$ to $C_{16}$ aromatic dicarboxylic acids; poly(tetramethylene oxide)glycol having a molecular weight from about 400 to about 12,000 and optionally epsilon-caprolactone, polyepsilon-caprolactone or hydroxy-terminated derivatives thereof.

The copolyetherester elastomers described herein may be prepared by conventional esterification and condensation reactions for the production of polyesters. Exemplary processes are set forth in U.S. Patent Nos. 3,763,109; 3,651,014; 3,663,653 and 3,801,547, incorporated herein by reference. Additionally, these compositions may be prepared by such processes and other known processes to effect random

5

copolymers, block copolymers, or hybrids thereof wherein both random and block units are present.

The foregoing copolyetherester elastomers are modified in accordance with the teachings of the instant invention by admixing or blending therewith poly(butylene terephthalate) and inert particulate nucleating agents including the metal salts of monocarboxylic acids and dicarboxylic acids; metal salts of aromatic carboxylic acids such as benzoic acid; hydrous magnesium silicates such as, talc, and aluminum silicates such as, clay; polyol acetals such as, substituted sorbitol; metal salts of organophosphates such as, sodium di(4-t-butylphenyl) phosphate, and the like.

Generally, the sodium salts are the preferred metal salts of the monocarboxylic and dicarboxylic acids which may be used as nucleating agents, but other metals commonly used to prepare such metal salts may also be used, for example, the potassium salts, the lithium salts, and the like. Examples of such acids, the metal salts of which may be used as inert, particulate nucleating agents, include formic, acetic, propionic, butyric, valeric, caproic, caprylic, capric, lauric, myristic, palmitic, stearic, oleic, linoleic, linolenic, cyclohexanecarboxylic, phenylacetic, benzoic, o-toluic, m-toluic, p-toluic, o-chlorobenzoic, m-chlorobenzoic, p-chlorobenzoic, o-bromobenzoic, m-bromobenzoic, p-bromobenzoic, o-nitrobenzoic, m-nitrobenzoic, p-nitrobenzoic, phthalic, isophthalic, terephthalic, salicylic, p-hydroxybenzoic, anthranilic, m-aminobenzoic, p-aminobenzoic, o-methoxybenzoic, m-methoxybenzoic, p-methoxybenzoic (anisic), oxalic, malonic, succinic, glutaric, adipic, maleic and fumaric. Preferred metal salts of carboxylic acids include sodium stearate and sodium carbonate. Also, minerals such as hydrous magnesium silicates (talc) and hydrous aluminum silicates (clay) function as inert particulate nucleating agents suitable for use in the practice of the present invention. An example of a commercially available suitable mineral is talc.

While most any amount of the modifying combination of poly(butylene terephthalate) and inert particulate nucleating agent will create a synergistic effect on the nucleation of the copolyetherester, in order to obtain compositions having the enchanced crystallization properties and/or decreased mold cycle time without substantially effecting the flexural modulus, it is necessary that the composition contain from about 94 to about 97.9 percent by weight copolyetherester elastomer, about 2 to about 5 percent by weight of poly(butylene terephthalate), and about 0.1 to about 1.0 percent by weight of inert particulate nucleating agent. As used herein, percent by weight is based on the total weight of the composition. In order to obtain the enhanced crystallization properties, it is preferred that the poly(butylene terephthalate) not exceed the amount of the copolyetherester elastomer.

While the compositions of this invention possess many desirable properties, it is sometimes advisable and preferred to further modify the compositions against thermal or oxidative degradation as well as degradation due to ultraviolet light. This can be done by incorporating well-known stabilizers into the blend compositions. Satisfactory stabilizers are phenols and their derivatives and compounds containing polymeric phenolic esters.

Representative phenol derivatives useful as stabilizers include tetrakis[(methylene 3-(3′,5-di-tert-butyl-4′-hydroxyphenyl)propionate] methane; tetrakis[methylene (3,5-di-tert-butyl-4-hydroxyhydrocinnamate)] methane; octadecyl 3-(3′,5′-di-tert-butyl-4′-hydroxyphenyl) propionate; and octadecyl-3,5-di-tert-butyl-4-hydroxyhydrocinnamate. Mixtures of hindered phenols with esters of thiodipropionic acid and phosphite esters are particularly useful.

It is also sometimes desirable to modify the composition by the addition of flow promoters, plasticizers, paraffin waxes and mineral oils to impart lubricious properties to the crystalline or particulate molecules of the blend. Pigments, impact modifiers, flame retardants and the like can also be used to modify the blends of the present invention.

The compositions of the invention may be prepared by any of the well known techniques for preparing polymer blends or admixtures, with extrusion blending being preferred. Suitable devices for the blending include single screw extruders, twin screw extruders, internal mixers such as the Bambury Mixer, heated rubber mills (electric or oil heat) or Farrell continuous mixers. Injection molding equipment can also be used to accomplish blending just prior to molding, but care must be taken to provide sufficient time and agitation to insure uniform blending prior to molding.

Alternative methods include dry blending prior to extrusion or injection molding as well as precompounding of two ingredients, particularly the poly(butylene terephthalate and inert particulate nucleating agent(s) prior to mixing with the thermoplastic copolyetherester elastomer.

## EXAMPLES

The following examples are presented to illustrate several preferred embodiments of the invention, but the invention should not be considered to be limited thereto. All parts and percentages are by weight unless otherwise specified.

The following copolyetheresters were used in exemplifying the present invention:

## Polymer A

Polymer A is a block copolyetherester having about 80% poly((0.5) 1,4-tetramethylene-co-(0.5) hexamethylene terephthalate) and 20% poly(tetramethylene oxide). It is available as LOMOD® B from General Electric Company.

## Polymer B

Polymer B is a random copolyetherester derived from 20 parts butanediol, 38 parts dimethylterephthalate 14 parts poly(tetramethylene ether)glycol and 18 parts epsilon-caprolactone. It is commercially available as LOMOD® H from General Electric Company.

## Polymer C

Polymer C is a random copolyetherester derived from 33 parts ethylene glycol, 45 parts dimethylterephthalate and 22 parts poly(tetramethylene ether)glycol (MW 1,000). It is available commercially as LOMOD® C from General Electric Company.

## Polymer D

Polymer D is a random segmented copolyetherester derived from butanediol, dimethyl terephthalate and poly(tetramethylene ether)glycol (MW 1,000) and is available from E.I. du Pont as Hytel® 5556.

## Polymer E

Polymer E is a random segmented copolyetherester derived from butanediol, butenediol, dimethyl terephthalate, and poly(tetramethylene ether) glycol (MW 1,000) and is available from GAF Corporation as GAFLEX® 547.

Five copolyetherester elastomers were prepared and blended with various combinations of poly(butylene terephthalate), inert particulate nucleating agent, and additives such as, stabilizers and lubricants, to illustrate the invention and its benefit over unmodified copolyetherester and poly(butylene terephthalate)-modified copolyetherester.

Measurements of heat of fusion (formation) and crystallization temperatures ($T_c$) were performed by differential scanning calorimetry. The $T_c$ is defined as the temperature where the recrystallization peak maximum occurred during cooling at a 20°C per minute cooling rate of specimen. Larger $T_c$ values or heat of fusion indicate greater efficiency of the additives for improving crystallization behavior. Flexural modulus properties were determined according to ASTM method D790.

Mold cycle time is determined by molding the polymer into a block having dimensions of about 5 inches x 1 inch x 0.5 inch. The length of time it takes for the block to solidify (crystallize) throughout is the mold cycle time. The block of polymer is cut open to determine the amount of unsolidified polymer in the center of the block.

In the Examples below, the ingredients shown in the Tables were blended with each other at room temperature. The blend consisting of the ingredients in the Tables below, were fed into an extruder (2.5 inch vented) at a temperature of 380°F to about 500°F. The extrudate is then comminuted into pellets or other suitable shapes. This mixture is then dried and fed into a conventional molding machine. The molding temperature may be from about 360° F to about 480° F with the mold temperture being from about 80° F to 150° F.

Example 1

Nine (9) different blends were prepared from the ingredients specified in Table 1 to illustrate the invention and molded as described above. The $T_c$, mold cycle time and flexural modulus were determined for the particular blends as shown. The following designations are used in Table 1 below:

Na stearate = sodium stearate
PBT = poly(butylene terephthalate)
Acrawax C = ethylene bis stearamide.

TABLE 1

| POLYMER A BLEND COMPOSITIONS | | | | | | | | | |
|---|---|---|---|---|---|---|---|---|---|
| BLEND NO. | 1 | 2 | 3 | 4 | 5 | 6 | 7 | 8 | 9 |
| LOMOD® B | 98.5 | 97.5 | 93.5 | 92.5 | 97.5 | 97.0 | 92.0 | 94.0 | 92.0 |
| Stablilizers | 1.5 | 2.0 | 1.5 | 2.0 | 1.5 | 2.0 | 2.0 | 2.0 | 2.0 |
| Na Stearate | - | 0.5 | - | 0.5 | - | 0.5 | 0.5 | 0.5 | - |
| PBT | - | - | 5.0 | 5.0 | - | - | 5.0 | 3.0 | 5.0 |
| $Na_2CO_3$ | - | - | - | - | - | - | - | - | 0.5 |
| Acrawax C | - | - | - | - | 1.0 | 0.5 | 0.5 | 0.5 | 0.5 |
| $T_c$ (°C) | 104 | 105 | 126 | 136 | 107 | 112 | 137 | 140 | 153 |
| Mold Cycle Time (secs.) | - | - | - | - | - | 150 | 120 | 120 | 90 |
| Flexural Modulus (psi) (In Thousands) | 21 | 21 | 25 | 25 | 22 | 21.3 | 26 | 26 | 29 |

Table 1 illustrates the synergistic effect on the nucleation of copolyetherester materials by the addition of poly(butylene terephthalate) and inert particulate nucleating agent as defined herein. The incorporation of both poly(butylene terephthalate) and nucleating agent ($Na_2CO_3$ and/or sodium stearate) in the amounts specified by the present invention provides compositions with substantially unchanged flexural modulus and increased $T_c$. Although the addition to the copolyetherester of poly(butylene terephthalate) or inert particulate agent singularly results in enhanced physical properties as well, copolyetheresters with better physical properties are obtained when the poly(butylene terephthalate) is combined with the nucleating agents of the present invention.

The synergistic effect on the nucleation of the polyetherester materials by the addition of poly(butylene terephthalate) and nucleating agent is best conceptualized (theorized) as a two-step process. The addition of the modifying combination provides convenient sites for the nucleation of the copolyester to occur. Copolyetherester elastomers do not have ready sites for nucleation to occur and have lower $T_c$ and extended mold cycle times. Evidence of the creation of these convenient nucleation sites can best be seen by contrasting the physical properties of blend 1 and blend 4 in Table 1. Substantial increases in $T_c$ and reduced mold cycle time arise by the addition of the modifying compounds of poly(butylene terephthalate) and sodium stearate.

The second step of the improved copolyetherester nucleation process of the present invention is to speed up the nucleation once it has begun, for it is advantageous to minimize the mold cycle time for economic reasons. Additives can have this desirable effect if they can act as a molecular lubricant. Nucleation is a process whereby crystals originate on a nucleating agent in a structured form. Additives with lubricant properties facilitate this orientation process by imparting lubricious properties to the crystalline molecules allowing the crystalline molecules to move more easily into the aligned crystalline formation. This increased ease of movement by the crystalline molecules is again evident by comparison of blends in Table 1. The comparison of blend 1 with blend 5 and blend 4 with blend 7 demonstrates the beneficial effects of lubricious additives on the copolyetherester nucleating process by the increase in $T_c$ without any significant change in flexural modulus. It is known in the art that Acrawax C is a lubricant that imparts the advantageous lubricious properties to the copolyetherester crystalline molecules. Further, it is also known that flow promoters, plasticizers, paraffin waxes and mineral oils impart this advantageous property. The foregoing theoretical discussion on nucleation is not intended in any way to limit the scope of the present invention.

EXAMPLE 2

Ten (10) different blends are illustrated in Table 2 below. Blending, extruding and molding were carried out as described above. The $T_c$ and $\Delta H$ of fusion are shown for the various blends and were measured as described above. The following designations are used in Table 2 below:

PBT = poly(butylene terephthalate)
Mark 2140 = stabilizer
Wytox 312 = Stabilizer
Irganox 1076 = stabilizer
Acrawax C = lubricant.

TABLE 2

| POLYMER B AND C BLEND COMPOSITIONS | | | | | | | | | | |
|---|---|---|---|---|---|---|---|---|---|---|
| Blend No. | 1 | 2 | 3 | 4 | 5 | 6 | 7 | 8 | 9 | 10 |
| LOMOD® H | 99.3 | 98.8 | 94.3 | 93.8 | - | - | - | - | - | - |
| LOMOD® C | - | - | - | - | 99.3 | 98.8 | 94.3 | 93.8 | 98.2 | 97.7 |
| Na₂CO₃ | - | 0.5 | - | 0.5 | - | 0.5 | - | 0.5 | - | 0.5 |
| PBT Powder | - | - | 0.5 | 0.5 | - | - | 5.0 | 5.0 | - | - |
| Mark 2140 | 0.25 | 0.25 | 0.25 | 0.25 | 0.25 | 0.25 | 0.25 | 0.25 | - | - |
| Wytox 312 | 0.25 | 0.25 | 0.25 | 0.25 | 0.25 | 0.25 | 0.25 | 0.25 | - | - |
| Irganox 1076 | 0.2 | 0.2 | 0.2 | 0.2 | 0.2 | 0.2 | 0.2 | 0.2 | - | - |
| Acrawax C | - | - | - | - | - | - | - | - | 0.5 | 0.5 |
| Stabilizer | | | | | | | | | 1.3 | 1.3 |
| $T_c$ °C | 140 | 139 | 140/72 | 140/96 | 139 | 143 | 134 | 131 | 190 | 199 |
| $\Delta H$ of fusion cal/g | 0.5 | 0.3 | 1.49 | 1.99 | 5.7 | 6.4 | 6.1 | 6.6 | - | - |

From Table 2 it is apparent that the modifying combination of poly(butylene terephthalate and inert nucleating agent of this invention has had no effect in raising the $T_c$ of the copolyetheresters. However, the heat of fusion of the blends has been substantially increased by the addition of the combination. This is indicative of a substantial increase in the rate of crystallization. This increase in the crystallization rate can best be seen in comparing blends 1 and 4 of Table 2. The substantial increase in heat of fusion suggests a resultant decrease in mold cycle time, a significant manufacturing advantage.

EXAMPLES 3 - 4

An additional series of blends were prepared to further demonstrate the scope of the present invention. The compositions of these blends, as well as physical properties, are disclosed in Tables 3 and 4. These additional examples are intended to show the broad applicability of the present invention to copolyetheresters as a class. In the tables below R-51 and Irganox are stabilizers. PBT is poly(butylene terephthalate).

TABLE 3

| POLYMER D BLEND COMPOSITIONS | | | |
|---|---|---|---|
| Hytrel®5556 | 99.5 | 99.0 | 99.0 |
| R51 | 0.3 | 0.3 | 0.3 |
| Irganox 1010 | 0.2 | 0.2 | 0.2 |
| Na Stearate | - | 0.5 | - |
| Na$_2$CO$_3$ | - | - | 0.5 |
| PBT | - | - | - |
| $T_c$ | 154.7 | 164.8 | 153.3 |

TABLE 4

| POLYMER E BLEND COMPOSITIONS | | | | | |
|---|---|---|---|---|---|
| GAFLEX®547 | 99.5 | 99.0 | 99.0 | 94.0 | 94.0 |
| R51 | 0.3 | 0.3 | 0.3 | 0.3 | 0.3 |
| Irganox 1010 | 0.2 | 0.2 | 0.2 | 0.2 | 0.2 |
| Na Stearate | - | 0.5 | - | - | 0.5 |
| Na$_2$CO$_3$ | - | - | 0.5 | 0.5 | - |
| PBT | - | - | - | 5.0 | 5.0 |
| $T_c$ | 134.7 | 137.5 | 131.0 | 136.7 | 144.1 |

It is clear from the data of Tables 3 and 4 that the addition of an inert particulate nucleating agent to poly(butylene terephthalate) imparts better physical properties than those which arise when the the nucleating agent or poly(butylene terephthalate) are used alone.

EXAMPLE 5

This example illustrates the effectiveness of sodium di(4-t-butylphenyl)phosphate, shown in the Table as MARK® 2180, as an inert, particulate nucleating agent in combination with poly(butylene terephthalate), referred to in the Table as PBT to increase $T_c$ of a copolyetherester. The other ingredients are the stabilizers shown above.

TABLE 5

| POLYMER B BLEND COMPOSITIONS | | | |
|---|---|---|---|
| LOMOD®B | 98.0 | 93.5 | 92.5 |
| MARK®2140 | 0.5 | 0.5 | 0.5 |
| IRGANOX 1035 | 0.5 | 0.5 | 0.5 |
| WYTOX 312 | 0.5 | 0.5 | 0.5 |
| MARK®2180 | 0.5 | - | 0.5 |
| PBT (powder) | - | 5.0 | 5.0 |
| $T_c$ | 111 | 126 | 132 |

Although the present invention has been described with reference to the foregoing specification, many modifications, combinations and variations of the invention will be apparent to those skilled in the art in light of the above teachings. It is therefore understood that changes may be made to the particular embodiments of the invention, which are within the full intended scope of the invention as defined by the following claims.

**Claims**

1. A thermoplastic molding composition comprising about 94 to about 97.9 percent by weight copolyetherester elastomer, about 0.1 to about 1.0 percent by weight inert, particulate nucleating agent and about 2.0 to about 5.0 percent by weight poly(butylene terephthalate), percent by weight based on the total weight of the composition.

2. The composition of Claim 1 wherein the copolyetherester elastomer is derived from:
a. one or more diols;
b. one or more dicarboxylic acids or derivatives thereof;
c. one or more long chain glycols having a molecular weight of about 400 to about 12,000; and
d. optionally, one or more caprolactones or polycaprolactones, wherein the long chain glycol and caprolactone or polycaprolactone comprise about 5 to about 70 percent by weight of the copolyetherester.

3. The composition of Claim 2 wherein the copolyetherester comprises a caprolactone in an amount from about 2 to about 50 percent by weight.

4. The composition of Claim 3 wherein the caprolactone is epsilon-caprolactone.

5. The composition of Claim 2 wherein the copolyetherester comprises a caprolactone in an amount from about 10 to about 30 percent by weight.

6. The composition of Claim 5 wherein the caprolactone is epsilon-caprolactone.

7. The composition of Claim 1 wherein the copolyetherester elastomer is derived from:
a. one or more $C_2$ to $C_{19}$ aromatic, aliphatic or cycloaliphatic diols;
b. one or more $C_4$ to $C_{36}$ dicarboxylic acids or derivatives thereof having a molecular weight of less than about 350;
c. one or more poly(alkylene oxide)glycols having a molecular weight of about 900 to about 4,000; and
d. optionally, one or more caprolactones or polycaprolactones, wherein
(i) at least about 60 mole percent of the diol in the composition is the same diol;
(ii) at least about 60 mole percent of the dicarboxylic acid in the composition is the same dicarboxylic acid; and
(iii) the weight percent of poly(alkylene oxide) glycol and caprolactone or polycaprolactone component each is about 10 to about 50, based on the weight of the copolyetherester.

8. The composition of Claim 7 wherein at least about 80 mole percent of the diol in the composition is the same diol and at least about 80 mole percent of the dicarboxylic acid in the composition is the same dicarboxylic acid.

9. The composition of Claim 8 wherein the derivative of dicarboxylic acid is dimethyl terephthalate and comprises at least about 80 mole percent of the composition.

10. The composition of Claim 7 wherein the derivative of dicarboxylic acid is dimethyl terephthalate and comprises at least about 60 mole percent of the composition.

11. The composition of Claim 7 wherein the derivative of dicarboxylic acid is selected from the group consisting of hexahydrophthalic anhydride, $C_{36}$ dimer acid and dimethyl-terephthalate.

12. The composition of Claim 7 wherein the poly(alkylene oxide)glycol is selected from the group consisting of poly(ethylene oxide)glycol, poly(propylene oxide)glycol, poly(tetramethylene oxide)glycol and copoly(propylene oxide-ethylene oxide)glycol.

13. The composition of Claim 1 wherein the inert, particulate nucleating agent is selected from the group consisting of metal salts of monocarboxylic acids, metal salts of dicarboxylic acids, hydrous magnesium silicates, hydrous aluminum silicates, metal salts of organophosphates and polyol acetals.

14. The composition of Claim 1 wherein the inert, particulate nucleating agent is sodium stearate

15. The composition of Claim 1 wherein the inert, particulate nucleating agent is sodium carbonate

16. The composition of Claim 1 wherein the inert, particulate nucleating agent is talc or clay.

17. The composition of Claim 1 wherein the inert, particulate nucleating agent is sodium di(4-t-butylphenyl)phosphate.

18. The composition of Claim 1 wherein the inert, particulate nucleating agent is a metal salt of benzoic acid.

19. The composition of Claim 18 wherein the inert, particulate nucleating agent is sodium benzoate.

11

20. The composition of Claim 1 further comprising about 2 to about 4 percent by weight of the total composition of at least one additive selected from the group consisting of a flow promoter, a plasticizer, a paraffin wax, mineral oil and mixtures thereof.